# EUROPÄISCHE PATENTSCHRIFT

(11) **EP 1 327 925 B1**
(45) Veröffentlichungstag und Bekanntmachung des Hinweises auf die Patenterteilung: **17.08.2005**
(21) Anmeldenummer: 02000735.7
(22) Anmeldetag: 12.01.2002
(51) Int. Cl.: G05B 19/418, G07C 1/10

(54) **Betriebsdaten-Erfassungsvorrichtung**
Operational data measurement device
Appareil de saisie de données de fonctionnement

(43) Veröffentlichungstag der Anmeldung: 16.07.2003
(73) Patentinhaber: Blickle GmbH, 72419 Neufra / Hohenzollern (DE)
(72) Erfinder: Zamzow, Claus Dipl.-BW(FH), 72474 Winterlingen (DE)
(74) Vertreter: Kiessling, Christian

(56) Entgegenhaltungen:
- EP-A- 0 890 927
- DE-A- 19 505 330

## Beschreibung

Die Erfindung betrifft eine Betriebsdaten-Erfassungsvorrichtung mit einer Einrichtung zum Eingeben vorherbestimmter erster Betriebsgrößen einer Werkzeugmaschine wie beispielsweise Auftragsnummern, einer Einrichtung zum Sensieren variabler zweiter Betriebsgrößen der Werkzeugmaschine sowie einer EDV-Anlage mit einer Prozessoreinrichtung zum Errechnen von Betriebsdaten der Werkzeigmaschine aufgrund der vorherbestimmten ersten und den variablen zweiten Betriebsgrößen und einer Ausgabeeinrichtung zum Ausgeben der errechneten Betriebsdaten.

Betriebsdaten-Erfassungsvorrichtungen der eingangs genannten Art sind im Stand der Technik seit längerem bekannt und werden unter anderem aber nicht ausschließlich dazu verwendet, diejenigen Herstellungskosten zu berechnen, die pro Arbeitsgang für die Fertigung eines vorgegebenen Bauteiles an einer Werkzeugmaschine anfallen. Die Kosten pro Arbeitsgang ergeben sich dabei aus dem Produkt der Belegungszeit der Werkzeugmaschine mit den Kosten der Werkzeugmaschine, auch Maschinenstundensatz benannt. In den letzteren gehen ein die Unterhaltkosten für die Werkzeugmaschine wie etwa die Kosten für Strom und gegebenenfalls Wasser und Schmiermittel o.ä., des weiteren Ersatzteile, die Personalkosten sowie insbesondere die Anschaffungskosten. Die Herstellungskosten eines Bauteils ergeben sich dann als Summe der Kosten der für die Herstellung notwendigen Arbeitsgänge. Die Betriebsdaten-Erfassungsvorrichtungen der eingangs genannten Art sind in der Regel sehr universell einsetzbar und weisen den mit einer unspezifischen Auslegung verbundenen Nachteil auf, dass sie sehr teuer sind und aufgrund ihrer Komplexität nicht benutzerfreundlich sind.

Aus der Druckschrift DE 195 05 330 ist eine Betriebsdaten-Erfassungsvorrichtung mit erster Betriebsdateneingabe (Maschinennummer), Sensierung (zweite Betriebsdaten, z.B. Nutzungszeit) und EDV-Anlage zur Berechnung dritter Betriebsdaten (z. B. Maschinen-Stückkosten) bekannt.

Aufgabe der Erfindung ist es deshalb, eine Betriebsdaten-Erfassungsvorrichtung zu schaffen, mittels derer eine kostengünstige, zuverlässige und benutzerfreundliche Erfassung von Herstellungskosten pro Arbeitsgang bzw. pro zu erstellendem Bauteil ermöglicht ist.

Für eine Betriebsdaten-Erfassungsvorrichtung der eingangs genannten Art wird diese Aufgabe dadurch gelöst, dass die Einrichtung zum Eingeben vorherbestimmter erster Betriebsdaten einer Werkzeugmaschine von einem numerische oder alphanumerische Daten liefernden Barkodelesegerät gebildet ist, und die Einrichtung zum Sensieren variabler zweiter Betriebsdaten der Werkzeugmaschine von einer Uhr gebildet ist, die den Zeitpunkt des Eingangs von dem Barkodelesegerät gelieferten ersten Betriebsdaten in einen adressierbaren Speicher (Port) der EDV-Anlage feststellt, wobei zwischen dem Barkodelesegerät und dem adressierbaren Speicher eine mit einer Netzwerkadresse versehene Identifizierungseinheit mit einem weiteren Mikroprozessor vorgesehen ist, in der den ersten Betriebsdaten des Barkodelesegerätes weitere Daten bezüglich einer Maschinenkennung beigefügt werden.

Bevorzugte Ausführungsformen der Erfindung sind Gegenstand der Unteransprüche.

Bei der erfindungsgemäßen Betriebsdaten-Erfassungsvorrichtung wird durch die Merkmalskombination, dass die Einrichtung zum Eingeben vorherbestimmter erster Betriebsdaten einer Werkzeugmaschine von einem numerische oder alphanumerische Daten liefernden Barkodelesegerät gebildet ist, und die Einrichtung zum Sensieren variabler zweiter Betriebsdaten der Werkzeugmaschine von einer Uhr gebildet ist, die den Zeitpunkt des Eingangs von dem Barkodelesegerät gelieferten ersten Betriebsdaten in einen adressierbaren Speicher (Port) der EDV-Anlage feststellt, wobei zwischen dem Barkodelesegerät und dem adressierbaren Speicher eine mit einer Netzwerkadresse versehene Identifizierungseinheit mit einem weiteren Mikroprozessor vorgesehen ist, in der den ersten Betriebsdaten des Barkodelesegerätes weitere Daten bezüglich einer Maschinenkennung beigefügt werden, erreicht, dass eine Vorrichtung geschaffen ist, bei der alle relevanten Betriebsdaten mittels kostengünstiger Standardbauteile schnell und auch von ungeübtem Personal in eine EDV-Anlage einlesbar sind, um die Herstellungskosten eines bestimmten Bauteiles zu bestimmen.

Gemäß einer ersten bevorzugten Ausführungsform der erfindungsgemäßen Vorrichtung ist vorgesehen, dass die Netzwerkadresse ist gemäß Internet Protokoll vergeben.

Gemäß einer anderen bevorzugten Ausführungsform der erfindungsgemäßen Vorrichtung ist vorgesehen, dass die Uhr von der eigenen inneren Uhr der EDV-Anlage gebildet ist, wobei die EDV-Anlage an eine Empfangseinrichtung für die über Radiowellen ausgesendete Atomzeit DCF 77 angeschlossen ist, um die eigene innere Uhr regelmäßig zu updaten.

In der EDV-Anlage des erfindungsgemäßen Vorrichtung ist vorzugsweise ein Programm gespeichert ist, das bewirkt, dass die in den adressierbare Speicher eingelesenen Daten auf ihre Maschinenkennung überprüft werden und je nach Maschinenkennung einer gesonderten Datei zugeordnet werden.

Gemäß einer wichtigen bevorzugten Ausführungsform der erfindungsgemäßen Vorrichtung ist vorgesehen, dass in der Datei enthalten sind Daten bezüglich:
a. Tag
b. Monat
c. Jahr
d. Uhrzeit in Stunden
e. Uhrzeit in Minuten
f. Uhrzeit in Sekunden
   wobei die Daten gemäß a. bis f. den Anfangszeitpunkt eines Herstellungsvorganges n eines Bauteiles darstellen
g. Name der Identifikationseinheit und
h. Inhalt der mit der Identifikationseinheit übermittelten numerischen oder alphanumerischen Daten des BarkodeLesegerätes.

Gemäß einer weiteren wichtigen bevorzugten Ausführungsform der erfindungsgemäßen Vorrichtung ist vorgesehen, dass der Endzeitpunkt eines Herstellungsvorgangs n eines beliebigen Bauteiles durch den Eingang eines späteren Herstellungsvorganges n+1 eines beliebigen anderen Bauteiles definiert ist. Der Endzeitpunkt eines Herstellungsvorgangs n eines beliebigen Bauteiles ist dabei vorzugsweise durch Kopieren des Datensatzes des späteren Herstellungsvorganges n+1 eines beliebigen anderen Bauteiles definiert, wobei dem kopierten Datensatz eine zusätzliche Kennung beigefügt wird, um diesen Datensatz als kopiert zu erkennen.

Vorteilhaft ist es ebenfalls, wenn die in der Datei gespeicherten Daten mit einem Betriebskalender verglichen werden, um Leerzeiten der Werkzeugmaschinen des Nachts sowie an Sonn- und Feiertagen zu berücksichtigen.

In der EDV-Anlage des erfindungsgemäßen Vorrichtung ist ein Programm gespeichert, dass eine automatische Berechnung der Kosten eines Arbeitsganges zur Herstellung eines Bauteils sowie der insgesamten Herstellungskosten des Bauteils aufgrund der ermittelten Daten durchführt.

Vorzugsweise ist ein Display vorgesehen, das die von dem Barkodelesegerät gelieferten ersten Betriebsdaten anzeigt.

Das in der EDV-Anlage gespeicherte Programm überprüft gemäß einer weiteren bevorzugten Ausführungsform der Erfindung, ob die in den adressierbaren Speicher einzulesenden Daten korrekt eingelesen und gespeichert worden sind, wobei in diesem Fall ein entsprechendes Signal an das Display gesendet wird, um diesen Zustand anzuzeigen.

Die erfindungsgemäße Betriebsdaten-Erfassungsvorrichtung wird im folgenden anhand einer bevorzugten Ausführungsform erläutert, die in den Figuren der Zeichnung dargestellt ist. Darin zeigen:

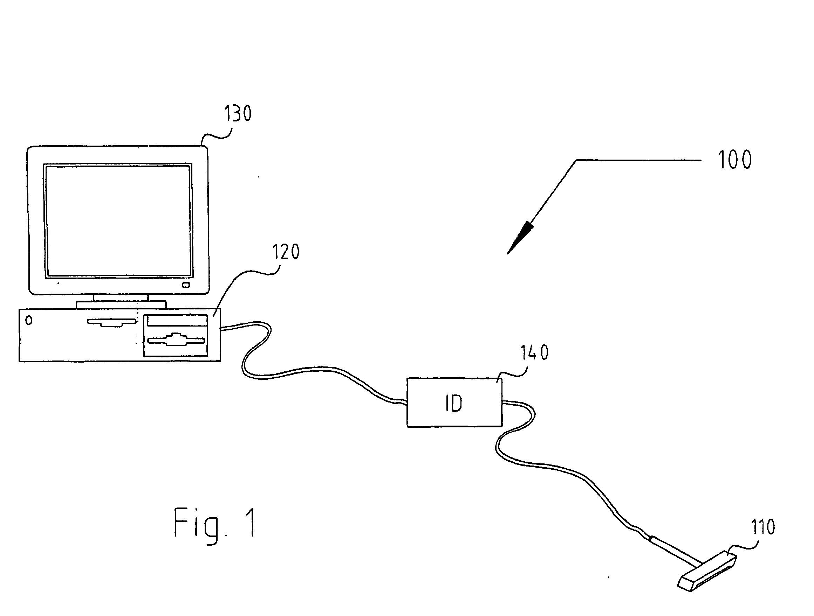

- Fig.1: eine bevorzugte Ausführungsform der erfindungsgemäßen Betriebsdaten-Erfassungsvorrichtung in einer Ansicht von schräg oben.

Die in Figur 1 dargestellte erfindungsgemäße Betriebsdaten-Erfassungsvorrichtung weist neben einer Einrichtung zum Eingeben vorherbestimmter erster Betriebsdaten einer Werkzeugmaschine eine Einrichtung zum Sensieren variabler zweiter Betriebsdaten der Werkzeugmaschine sowie eine EDV-Anlage mit einer Prozessoreinrichtung zum Errechnen von dritten Betriebsdaten der Werkzeugmaschine aufgrund der vorherbestimmten ersten und der variablen zweiten Betriebsdaten und eine Ausgabeeinrichtung zum Ausgeben der errechneten dritten Betriebsdaten auf, wobei die Einrichtung zum Eingeben vorherbestimmter erster Betriebsdaten einer Werkzeugmaschine von einem numerische oder alphanumerische Daten liefernden Barkodelesegerät gebildet ist, und die Einrichtung zum Sensieren variabler zweiter Betriebsdaten der Werkzeugmaschine von einer Uhr gebildet ist, die den Zeitpunkt des Eingangs von dem Barkodelesegerät gelieferten ersten Betriebsdaten in einen adressierbaren Speicher (Port) der EDV-Anlage feststellt.

In der EDV-Anlage ist ein Programm gespeichert, dass eine automatische Berechnung der Kosten eines Arbeitsganges zur Herstellung eines Bauteils sowie der insgesamten Herstellungskosten des Bauteils aufgrund der ermittelten Daten durchführt.

Zwischen dem Barkodelesegerät und dem adressierbaren Speicher ist eine mit einer Netzwerkadresse versehene Identifizierungseinheit mit einem weiteren Mikroprozessor vorgesehen, in der den ersten Betriebsdaten des Barkodelesegerätes weitere Daten bezüglich einer Maschinenkennung beigefügt werden. Die Netzwerkadresse ist dabei gemäß Internet Protokoll vergeben.

Die Uhr ist von der eigenen inneren Uhr der EDV-Anlage gebildet, wobei die EDV-Anlage an eine Empfangseinrichtung für die über Radiowellen ausgesendete Atomzeit DCF 77 angeschlossen ist, um die eigene innere Uhr regelmäßig zu updaten.

In der EDV-Anlage ist ein Programm gespeichert, das bewirkt, dass die in den adressierbaren Speicher eingelesenen Daten auf ihre Maschinenkennung überprüft werden und je nach Maschinenkennung einer gesonderten Datei zugeordnet werden. In der Datei sind Daten enthalten bezüglich:
a. Tag
b. Monat
c. Jahr
d. Uhrzeit in Stunden
e. Uhrzeit in Minuten
f. Uhrzeit in Sekunden
   wobei die Daten gemäß a. bis f. den Anfangszeitpunkt eines Herstellungsvorganges n eines Bauteiles darstellen
g. Name der Identifikationseinheit und
h. Inhalt der mit der Identifikationseinheit übermittelten numerischen oder alphanumerischen Daten des Barkode-Lesegerätes.

Der Endzeitpunkt eines Herstellungsvorgangs n eines beliebigen Bauteiles durch den Eingang eines späteren Herstellungsvorganges n+1 eines beliebigen anderen Bauteiles definiert ist, wobei der Endzeitpunkt eines Herstellungsvorgangs n eines beliebigen Bauteiles durch Kopieren des Datensatzes des späteren Herstellungsvorganges n+1 eines beliebigen anderen Bauteiles definiert ist, wobei dem kopierten Datensatz eine zusätzliche Kennung beigefügt wird, um diesen Datensatz als kopiert zu erkennen.

Die in der Datei gespeicherten Daten werden mit einem Betriebskalender verglichen, um Leerzeiten der Werkzeugmaschinen des Nachts sowie an Sonn- und Feiertagen zu berücksichtigen.

Ein Display ist vorgesehen, um die von dem Barkodelesegerät gelieferten ersten Betriebsdaten anzuzeigen.

Eine Betriebsdaten-Erfassung erfolgt bei der erfindungsgemäßen Vorrichtung in drei Schritten:

In einem ersten Schritt erfolgt das Erkennen eines vorgegebenen Fertigungsauftrages oder eines Arbeitsganges aufgrund einer diesem Fertigungsauftrag zugeordneten alphanumerischen oder numerischen Zahl mit Hilfe des Barcode-Lesegerätes. Das Barcode-Lesegerät gehört zum Stand der Technik und enthält einen Laser sowie einen Mikroprozessor und interpretiert und erkennt die schwarzweiße Flächenanordnung eines Barcodes in der Weise, dass es bestimmten einheitlich definierten schwarz-weißen Kombinationen direkt eine alphanumerische Zahl oder numerische Zahl zuordnet.

Diese Zahl wird von dem Barcode-Lesegerät erkannt und aus diesem ausgegeben und gelangt in einem Zweiten Schritt an den Eingang der Identifikationseinheit. Diese enthält einen Speicher mit einer Netzwerkadresse gemäß Internet-Protokoll und wirkt als Schnittstelle zwischen dem Barcode-Lesegerät und der EDV-Anlage, also beispielsweise einem PC, der die von dem Barcode-Lesegerät kommenden Informationen weiterverarbeitet.

Die Identifikationseinheit enthält ebenfalls eine Prozessoreinheit, wobei diese Prozessoreinheit einer von der Leseeinheit kommenden alphanumerischen oder numerischen Zahl eine Maschinenkennung beifügt. Am Ausgang einer Identifikationseinheit liegt dann also ein Datensatz vor, der die Adresse gemäß Internet-Protokoll der Identifikationseinheit enthält und darüber hinaus die alphanumerischen oder numerischen Daten der Leseeinheit enthält.

Bei der Übermittlung der Daten aus der Identifikationseinheit an den Eingang der EDV-Anlage werden die einer bestimmten Internetadresse also Internet Protokoll-Adresse zugeordneten Daten einem Speicher (Port) zugeordnet, so dass die alphanumerischen oder numerischen Daten dann an der Adresse dieses Speichers vorliegen. Eine auf dem PC gespeicherte Software überwacht den Speicher der EDV-Anlage und ordnet automatisch je nach Internet Protokoll-Adresse, also nach Kennung einer Identifikationseinheit die zu verarbeitenden Daten einem Speicherplatz mit einem vordefinierten Format zu.

Aufgrund des Umstandes, dass aus dem Speicherplatz pro Sendeeinheit, also für jeden Namen eine Anfangszeit eines Fertigungsauftrages gegeben wird, liegt für die entsprechende Maschine, also auch für die entsprechende Sendeeinheit keine Endzeit eines Fertigungsauftrages vor. Das Programm behebt diesen Mangel in der Weise, dass bei Eingang eines Auftrages n + 1 der entsprechende Datensatz kopiert wird und als Endzeit für den vorherigen Auftrag n eingetragen wird. Der kopierte Datensatz wird dabei mit einer besonderen Kennung versehen, wobei diese Kennung beispielsweise aus einem Buchstaben oder einer natürlichen Zahl bestehen kann, in der Weise, dass eine erste Zahl oder ein erster Buchstabe eine Anfangszeit eines Auftrages darstellt und eine andere Zahl bzw. ein anderer Buchstabe die Endzeit eines Auftrages bezeichnet.

Der PC ist beispielsweise mit einem herkömmlichen Tabellenkalkulationsprogramm wie EXEL geladen um in einem dritten Schritt eine Auswertung der weiterzuverarbeitenden Daten zu ermöglichen.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Betriebsdaten-Erfassungsvorrichtung mit einer Einrichtung zum Eingeben vorherbestimmter erster Betriebsdaten einer Werkzeugmaschine, einer Einrichtung zum Sensieren variabler zweiter Betriebsdaten der Werkzeugmaschine sowie einer EDV-Anlage mit einer Prozessoreinrichtung zum Errechnen von dritten Betriebsdaten der Werkzeugmaschine aufgrund der vorherbestimmten ersten und der variablen zweiten Betriebsdaten und einer Ausgabeeinrichtung zum Ausgeben der errechneten dritten Betriebsdaten, wobei die Einrichtung zum Eingeben vorherbestimmter erster Betriebsdaten einer Werkzeugmaschine von einem numerische oder alphanumerische Daten liefernden Barkodelesegerät gebildet ist, und die Einrichtung zum Sensieren variabler zweiter Betriebsdaten der Werkzeugmaschine von einer Uhr gebildet ist, die den Zeitpunkt des Eingangs von von dem Barkodelesegerät gelieferten ersten Betriebsdaten in einen adressierbaren Speicher (Port) der EDV-Anlage feststellt, **dadurch gekennzeichnet dass** zwischen dem Barkodelesegerät und dem adressierbaren Speicher eine mit einer Netzwerkadresse versehene Identifizierungseinheit mit einem weiteren Mikroprozessor vorgesehen ist, in der den ersten Betriebsdaten des Barkodelesegerätes weitere Daten bezüglich einer Maschinenkennung beigefügt werden.

2. Vorrichtung nach Anspruch 1, **dadurch gekennzeichnet, dass** die Netzwerkadresse gemäß Internet Protokoll vergeben ist.

3. Vorrichtung nach einem der vorhergehenden Ansprüche, **dadurch gekennzeichnet, dass** die Uhr von der eigenen inneren Uhr der EDV-Anlage gebildet ist, wobei die EDV-Anlage an eine Empfangseinrichtung für die über Radiowellen ausgesendete Atomzeit DCF 77 angeschlossen ist, um die eigene innere Uhr regelmäßig zu updaten.

4. Vorrichtung nach einem der vorhergehenden Ansprüche, **dadurch gekennzeichnet, dass** in der EDV-Anlage ein Programm gespeichert ist, das bewirkt, dass die in den adressierbaren Speicher eingelesenen Daten auf ihre Maschinenkennung überprüft werden und je nach Maschinenkennung einer gesonderten Datei zugeordnet werden.

5. Vorrichtung nach Anspruch 4, **dadurch gekennzeichnet, dass** in der Datei enthalten sind Daten bezüglich:
a. Tag
b. Monat
c. Jahr
d. Uhrzeit in Stunden
e. Uhrzeit in Minuten
f. Uhrzeit in Sekunden
wobei die Daten gemäß a. bis f. den Anfangszeitpunkt eines Herstellungsvorganges n eines Bauteiles darstellen
g. Name der Identifikationseinheit und
h. Inhalt der mit der Identifikationseinheit übermittelten numerischen oder alphanumerischen Daten des Barkcode-Lesegerätes.

6. Vorrichtung nach Anspruch 5, **dadurch gekennzeichnet, dass** der Endzeitpunkt eines Herstellungsvorgangs n eines beliebigen Bauteiles durch den Eingang eines späteren Herstellungsvorganges n+1 eines beliebigen anderen Bauteiles definiert ist.

7. Vorrichtung nach Anspruch 6, **dadurch gekennzeichnet, dass** der Endzeitpunkt eines Herstellungsvorgangs n eines beliebigen Bauteiles durch Kopieren des Datensatzes des späteren Herstellungsvorganges n+1 eines beliebigen anderen Bauteiles definiert ist, wobei dem kopierten Datensatz eine zusätzliche Kennung beigefügt wird, um diesen Datensatz als kopiert zu erkennen.

8. Vorrichtung nach einem der Ansprüche 5 bis 7, **dadurch gekennzeichnet, dass** die in der Datei gespeicherten Daten mit einem Betriebskalender verglichen werden, um Leerzeiten der Werkzeugmaschinen des Nachts sowie an Sonn- und Feiertagen zu berücksichtigen. ,

9. Vorrichtung nach einem der vorhergehenden Ansprüche, **dadurch gekennzeichnet, dass** in der EDV-Anlage ein Programm gespeichert ist, dass eine automatische Berechnung der Kosten eines Arbeitsganges zur Herstellung eines Bauteils sowie der insgesamten Herstellungskosten des Bauteils aufgrund der ermittelten Daten durchführt.

10. Vorrichtung nach einem der vorhergehenden Ansprüche, **dadurch gekennzeichnet, dass** ein Display vorgesehen ist, das die von dem Barkodelesegerät gelieferten ersten Betriebsdaten anzeigt.

11. Vorrichtung nach Anspruch 5, **dadurch gekennzeichnet, dass** in der EDV-Anlage ein Programm gespeichert ist, das überprüft, ob die in den adressierbaren Speicher einzulesenden Daten korrekt eingelesen und gespeichert worden sind und in diesem Fall ein entsprechendes Signal an das Display sendet.

## Claims

1. An operating data recording device having means for inputting predetermined first operating parameters of a machine tool, means for sensing variable second parameters of said machine tool, and an EDP system having processing means for computing operating data of said machine tool based on said predetermined first parameters and said variable second parameters, and output means for outputting the calculated operating data, wherein said means for inputting predetermined first operating data of a machine tool are formed by a barcode scanner that provides numeric or alphanumeric data, and said means for sensing variable second operating data of the machine tool are formed by a clock that determines the time at which said first operating data delivered by the barcode scanner are received in an addressable memory (port) of said EDP system, **characterized in that** between said barcode scanner and said addressable memory there is provided an identification unit having an additional microprocessor, which is provided with a network address and in which additional information relating to a machine identifier is appended to said first operating data provided by said barcode scanner.

2. A device as defined in claim 1, **characterized in that** the network address is an Internet protocol address.

3. A device as defined in any one of the previous claims, **characterized in that** said clock is formed by the clock inherent in said EDP system, this being connected to a system adapted to receive DCF 77 radio time to allow for regular updating of said inherent clock.

4. A device as defined in any one of the previous claims, **characterized in that** in the EDP system there is installed a program, by means of which the data read into said addressable memory are checked for their machine identifier and are allocated to a separate file assigned to said machine identifier.

5. A device as defined in claim 4, **characterized in that** said file contains data relating to:
a) day
b) month
c) year
d) time of day in hours
e) time of day in minutes
f) time of day in seconds
the data according to a) through f) representing the start time of a production process n of a component,
g) name of identification unit, and
h) contents of the numeric or alphanumeric data provided by the barcode scanner and transmitted with the aid of the identification unit.

6. A device as defined in claim 5, **characterized in that** the end time of a production step n of an arbitrary component is defined by the initiation of a subsequent production step n+1 of another arbitrary component.

7. A device as defined in claim 6, **characterized in that** the end time of a manufacturing operation n of an arbitrary component is defined by copying the data set of said subsequent manufacturing operation n+1 of another arbitrary component, an additional identifier being appended to said copied data set in order to identify this data set as copied.

8. A device as defined in any one of claims 5 to 7, **characterized in that** the data stored in said file are compared with an operations calendar in order to take account of downtimes of the machine tools at night and on Sundays and public holidays.

9. A device as defined in any one of the previous claims, **characterized in that** in the EDP system there is installed a program for automatic computation of the cost of a process step for the production of a component and also the total production costs of said component on the basis of the data recorded.

10. A device as defined in any one of the previous claims, **characterized in that** a display is provided which displays the first operating parameters supplied by said barcode scanner.

11. A device as defined in claim 5, **characterized in that** in the EDP system there is installed a program which checks whether the data to be read into said addressable memory have been correctly read and stored, in which case an appropriate signal is sent by said program to said display.

## Revendications

1. Système d'enregistrement de données d'exploitation comprenant un dispositif pour introduire des premières données d'exploitation prédéterminées d'une machine-outil, un dispositif pour détecter des deuxièmes données d'exploitation variables de la machine-outil ainsi qu' une installation de traitement de l'information comportant un processeur pour calculer des troisièmes données d'exploitation de la machine-outil, à base des premières données d'exploitation prédéterminées et des deuxièmes données d'exploitation variables, et un dispositif de sortie des troisièmes données d'exploitation calculées, le dispositif pour introduire des premières données d'exploitation prédéterminées d'une machine-outil étant constitué par un lecteur de codes à barres fournissant des données numériques ou alphanumériques, et le dispositif pour détecter des deuxièmes données d'exploitation variables de la machine-outil étant constitué par une horloge déterminant l'instant de l'entrée de premières données d'exploitation, fournies par le lecteur de codes à barres, dans une mémoire (port) de l'installation de traitement de l'information,
**caractérisé en ce qu'**une unité d'identification est prévue entre le lecteur de codes à barres et la mémoire à adresser, unité munie d'une adresse de réseau et comprenant un autre microprocesseur, dans laquelle d'autres données concernant un indicatif de machine sont ajoutées aux premières données d'exploitation du lecteur de codes à barres.

2. Système selon la revendication 1,
**caractérisé en ce que** l'adresse de réseau est attribuée conformément au protocole de réseau internet.

3. Système selon l'une quelconque des revendications préalables,
**caractérisé en ce que** l'horloge est constituée par l'horloge interne propre à l'installation de traitement de l'information, l'installation de traitement de l'information étant raccordée à une unité de réception du temps atomique DCF 77 émis par ondes radioélectriques, aux fins de la mise à jour régulière de l'horloge interne propre.

4. Système selon l'une quelconque des revendications préalables,
**caractérisé en ce qu'** un programme est installé dans l'installation de traitement de l'information, assurant que les données introduites dans la mémoire à adresser sont contrôlées relativement à leur indicatif de machine et sont attribuées, en fonction de l'indicatif de machine, à un fichier séparé.

5. Système selon la revendication 4,
**caractérisé en ce que** le fichier contient des données concernant :
a. le jour
b. le mois
c. l'an
d. l'heure
e. la minute
f. la seconde
les données des points a. à f. représentant l'instant de début d'une opération de fabrication n d'un élément de structure,
g. le nom de l'unité d'identification, et
h. le contenu des données numériques ou alphanumériques du lecteur de codes à barres transmises par l'unité d'identification.

6. Système selon la revendication 5,
**caractérisé en ce que** l'instant de fin d'une opération de fabrication n d'un élément de structure quelconque est défini par l'entrée d'une opération de fabrication ultérieure n+1 d'un autre élément de structure quelconque.

7. Système selon la revendication 6,
**caractérisé en ce que** l'instant de fin d'une opération de fabrication n d'un élément de structure quelconque est défini par recopie du jeu de données de l'opération de fabrication ultérieure n+1 d'un autre élément de structure quelconque, un indicatif additionnel étant attaché au jeu de données recopié afin de reconnaître le caractère de copie de ce jeu de données.

8. Système selon l'une des revendications 5 à 7,
**caractérisé en ce que** les données enregistrées dans le fichier sont comparues avec un calendrier d'entreprise afin de tenir compte des temps improductifs des machines-outils pendant la nuit et aux dimanches et jours fériés.

9. Système selon l'une quelconque des revendications préalables,
**caractérisé en ce que** dans l'installation de traitement de l'information il y a installé un programme qui exécute une calculation automatique des frais d'une opération dans la production d'un élément de structure ainsi que des frais totaux de production de l'élément de structure, à base des données déterminées.

10. Système selon l'une quelconque des revendications préalables,
**caractérisé en ce qu'** il y a prévu une console de visualisation affichant les premières données d'exploitation fournies par le lecteur de codes à barres.

11. Système selon la revendication 5,
**caractérisé en ce que** un programme est installé dans l'installation de traitement de l'information qui vérifie si les données à introduire dans la mémoire à adresser ont été introduites et enregistrées correctement et qui, dans l'affirmative, envoie un signal correspondant à la console de visualisation.
